# EUROPÄISCHE PATENTSCHRIFT

(11) **EP 1 090 664 B1**
(45) Veröffentlichungstag und Bekanntmachung des Hinweises auf die Patenterteilung: **21.11.2007**
(21) Anmeldenummer: 00119928.0
(22) Anmeldetag: 13.09.2000
(51) Int. Cl.: B01D 21/24

(54) **Schwimmschlammabzug**
Discharge of floating sludge
Evacuation des boues flottantes

(30) Priorität: 08.10.1999 DE 19948549
(43) Veröffentlichungstag der Anmeldung: 11.04.2001
(73) Patentinhaber: CYKLAR AG, 8872 Kaltbrunn (CH)
(72) Erfinder: Brauchli, Herbert, 8865 Bilten (CH)
(74) Vertreter: Laufhütte, Dieter

(56) Entgegenhaltungen:
- WO-A-98/32515
- DE-A- 4 218 027
- DE-A- 19 516 750
- DE-U- 8 433 943
- US-A- 3 447 683
- US-A- 4 196 087
- US-A- 4 422 771
- US-A- 4 956 100
- US-A- 5 378 376
- US-A- 5 958 240

## Beschreibung

Die Erfindung betrifft einen Schlammabzug, insbesondere zum Abzug von Schwimmschlamm in einem Klärbecken. Des weiteren betrifft die Erfindung ein Verfahren zur Selektionierung von Schlammpartitionen entsprechend ihren Absetzeigenschaften in einem Klärbecken.

Gemische aus Wasser und Leichtstoffen wie Öl oder Fett weisen an der Wasseroberfläche eine Schwimmschlammschicht auf. Auch bei der biologischen Abwasserbehandlung kann es bei Anwesenheit bestimmter Bakterien zur Bildung erheblicher Schwimmschlammschichten kommen. Dabei verbinden sich die zur Abwasserbelüftung eingetragenen Luftbläschen mit dem biologischen Schlamm und führen zu einer zähen, an der Wasseroberfläche schwimmenden Schwimmschlammschicht.

In vielen Bereichen führen diese Schwimmschlammschichten zu Problemen, indem Beckenwandungen belegt werden, es zu Geruchsbelästigung kommen kann, Vereisungen auftreten und in extremen Fällen die Schwimmstoffe über die Beckenkrone austreten. Zudem ist die gezielte Entfernung von Leichtstoffen häufig wünschenswert, da so die nachfolgende Behandlung erleichtert wird. Die Abtrennung des Schwimmschlamms soll dabei so erfolgen, daß nicht gleichzeitig große Wassermengen abgezogen werden.

Es gibt eine Vielzahl verschiedener Einrichtungen zum Abzug von Schwimmschlammschichten. Dabei ist das Problem aber weniger der Abzug der Schwimmschlammschicht selbst als vielmehr das Problem, die abzuziehenden Leichtstoffe an die Stelle des Abzugs zu fördern.

Häufig sind die Abzugsvorrichtungen ortsfest eingebaut. Sie entfernen den Schwimmschlamm in unmittelbarer Nähe des Abzugspunkts wie gewünscht, jedoch verbleibt der Schwimmschlamm in etwas weiterer Entfernung unbeeinflußt.

In Nachklärbecken von Kläranlagen werden Schwimmschlammabzugseinrichtungen mit den Räumeinrichtungen in den Nachklärbecken kombiniert. Dabei erreicht die Schwimmschlammabzugsvorrichtung bei jedem Räumvorgang die gesamte Beckenoberfläche. Da die Räumbewegung aber sehr langsam sein muß, reicht die Relativbewegung zwischen Schwimmschlamm und Räumeinrichtung häufig nicht aus, um den Schwimmschlamm in die Abzugsvorrichtung zu fördern. Zusätzliche mechanische Einrichtungen müssen dann den Schwimmschlamm in Rinnen und Trichter transportieren.

Aus US-A-4 956 100 ist dabei ein Abzug von Schwimmschlamm in einem Klärbekken gemäß dem Oberbegriff von Anspruch 1 mit einem Schwimmkörper, einem am Schwimmkörper angebrachten Rührwerk zur Erzeugung einer vom Schlammabzug nach unten gerichteten Flüssigkeitsströmung, einem am Schwimmkörper angebrachten Auffangbehälter mit einer ganz um den Schlammabzug umlaufenden Überlaufkante, sowie einem Förderaggregat, welches den in den Auffangbehälter gelangenden Schlamm über eine Ablaufleitung abführt, bekannt.

Mit einem solchen Schwimmschlammabzug ist ein großflächiger Abzug von Schwimmschlamm möglich, da die erzeugte Flüssigkeitsströmung an der Oberfläche der im Klärbecken befindlichen Flüssigkeit diesen auf den Schwimmschlammabzug zutreibt. Das Verfahren der US A-4 956 100 sieht jedoch nicht von neben dem Schwimmschlamm auch Leichteren Belebtschlamm abzusiehen.

Aufgabe der Erfindung ist es daher, einen Schlammabzug sowie ein Verfahren zur Selektionierung von Schlammpartitionen zur Verfügung zu stellen, welche neben einen großflächigen Abzug von Schwimmschlamm auch einen selektiven Abzug von leichten Schlammpartitionen erlauben.

Diese Aufgabe wird erfindungsgemäß von einem Schlammabzug gemäß Anspruch 1 gelöst und einem Verfahren gemäß Anspruch 9.

Mit Hilfe des Schwimmkörpers wird erreicht, daß der Schlammabzug an der Wasseroberfläche schwimmt und deshalb insbesondere den Schwimmschlamm sowie den oberflächennahen Schlamm abzieht. Durch das Mischaggregat wird eine vom Schlammabzug weg gerichtete Flüssigkeitsströmung erzeugt. Dies führt zur Ausbildung einer Konvektionsströmung im Klärbecken, die an der Wasseroberfläche zu einer allseitig zum Schlammabzug hin gerichteten Strömung führt. Durch diese Strömung wird der gesamte Schwimmschlamm der Oberflächenschicht zum Schlammabzug hin bewegt und kann dort aufgefangen werden. Im Gegensatz zu den Schlammabzugsvorrichtungen im Stand der Technik ist damit eine nicht nur lokale, sondern großflächige Abführung von Schwimmschlamm und leichten Schlammkomponenten möglich.

Zum Auffangen des Schlamms ist ein Auffangbehälter mit einer ganz oder teilweise um den Schlammabzug umlaufenden Überlaufkante vorgesehen. Der sich auf den Schlammabzug zu bewegende Schwimmschlamm gelangt im freien Überfall über die Überlaufkante in den Auffangbehälter. Von dort wird er durch ein Förderaggregat über eine Ablaufleitung abgeführt. Durch die Überlaufkante wird verhindert, daß die zusammen mit dem Schwimmschlamm abgezogene Wassermenge zu groß wird. Mit dem erfindungsgemäßen, kompakt bauenden Schlammabzug ist es möglich, selektiv Schwimmschlammschichten und andere leichte Schlammpartitionen großflächig abzuführen.

Gemäß einer vorteilhaften Ausführungsform der Erfindung ist der Auffangbehälter als ganz oder teilweise um den Schwimmkörper umlaufende Auffangrinne ausgebildet.

Durch die erzeugte Strömung bewegt sich der Schwimmschlamm von allen Seiten her auf den Schlammabzug zu. Es ist daher vorteilhaft, Schlamm von einem möglichst großen Winkelbereich rund um den Schlammabzug auffangen zu können. Mit Hilfe einer ganz oder teilweise um den Schwimmkörper umlaufenden Auffangrinne läßt sich ein Großteil des Schlamms auffangen. Gleichzeitig wird eine kompakte Bauform des Schlammabzugs ermöglicht.

Es ist von Vorteil, wenn die Höhe der Überlaufkante relativ zum Wasserspiegel einstellbar ist.

Je tiefer die Überlaufkante positioniert wird, um so höher ist der zusammen mit dem Schwimmschlamm abgezogene Wasseranteil. Gleichzeitig kann dann jedoch gewährleistet werden, daß die komplette Schwimmschlammschicht abgezogen wird. Dabei muß auch die durch das Förderaggregat zur Verfügung gestellte Förderleistung berücksichtigt werden, denn die hydraulische Leistungsfähigkeit der Abzugsvorrichtung muß immer größer sein als die Menge des einströmenden Schwimmschlammes. Durch eine passende Einstellung der Überlaufkante, beispielsweise mit Hilfe von Spindelschrauben, kann eine selektive Abförderung des Schwimmschlamms erzielt werden.

Weiterhin ist es von Vorteil, wenn der Auffangbehälter eine Schräge aufweist, wobei der in den Auffangbehälter gelangende Schlamm entlang der Schräge zum Förderaggregat gelangt.

Der von allen Seiten hier in den Auffangbehälter bzw. die Auffangrinne einfallende Schlamm kann dadurch zu einem Abzugstrichter geführt werden. Auf diese Weise kann der gesamte einfallende Schlamm durch das Förderaggregat abgepumpt werden.

Gemäß einer weiteren vorteilhaften Ausgestaltung der Erfindung ist das Förderaggregat eine Tauchpumpe. Derartige Tauchpumpen sind für den Einsatz unter Wasser ausgelegt, und daher kann eine derartige Tauchpumpe unterhalb der Auffangrinne angeordnet sein. Durch diese Möglichkeit, die Pumpe unterhalb des Wasserspiegels anzuordnen, wird eine kompakte Bauform des Schlammabzugs ermöglicht.

Gemäß einer weiteren vorteilhaften Ausführungsform der Erfindung umfaßt das Mischaggregat ein Rührwerk, mit dem die vom Schlammabzug weg gerichtete Flüssigkeitsströmung erzeugbar ist.

Ein derartiges Rührwerk besteht typischerweise aus einem Propeller, dessen Antriebswelle von einem (Elektro-) Motor angetrieben wird. Während die Bauform des Propellers das erzeugte Stömungsprofil festlegt, kann die Strömungsgeschwindigkeit über die Drehzahl des Antriebsmotors eingestellt werden. Ein derartiges Rührwerk stellt die einfachste und kostengünstigste Möglichkeit dar, die gewünschte Flüssigkeitsströmung zu erzeugen.

Gemäß einer weiteren vorteilhaften Ausführungsform der Erfindung ist ein Frequenzumsetzer vorgesehen, mit welchem die Drehzahl des Rührwerks einstellbar ist.

Je höher die Drehzahl des Propellers gewählt wird, um so stärker ist die im Klärbecken erzeugte Konvektionsströmung. Während bei geringer Konvektionsströmung lediglich die Schwimmschlammschicht sowie leichte, in der Nähe der Wasseroberfläche befindliche Schlammpartikel abgezogen werden, bewirkt eine stärkere Konvektionsströmung, daß auch schwerere Schlammpartikel in oberflächennahe Schichten hochgewirbelt werden. Daher werden bei einer höheren Drehzahl des Rührwerks auch Schlammpartitionen von höherer Dichte mit abgezogen. Auf diese Weise ist es möglich, die Zusammensetzung des abgezogenen Schlamms durch die Drehfrequenz des Rührwerks festzulegen.

Dies ist insbesondere dann von Bedeutung, wenn der erfindungsgemäße Schlammabzug in der biologischen Abwasserklärung, und zwar insbesondere im Belebungsbecken zum Einsatz kommt, Im Belebungsbecken werden hochmolekulare Abwasserpartikel mit Hilfe von Bakterien zersetzt. Diese Bakterien benötigen Sauerstoff, und deshalb muß für eine gute Durchlüftung des Belebungsbeckens gesorgt werden. Die im Belebungsbecken befindliche Biomasse wird als sogenannter "Belebtschlamm" bezeichnet. Da die Bakterien sich ständig vermehren, nimmt die Masse des Belebtschlamms ständig zu. Neben dem Schwimmschlamm muß deswegen im Belebungsbecken stets auch ein Teil des Belebtschlamms abgezogen werden. Bei Einsatz des erfindungsgemäßen Schlammabzugs in einem Belebungsbecken kann durch die Wahl der Drehzahl des Rührwerks festgelegt werden, inwiefern zusätzlich zum Schwimmschlamm auch die leichteren Komponenten des Belebtschlamms mit abgezogen werden.

Gemäß einer bevorzugten Ausgestaltung der vorliegenden Erfindung können Mittel vorgesehen sein, mittels derer der Schwimmkörper in einer horizontalen Lage fixiert wird. Durch die Komponenten des Mischaggregats sowie insbesondere durch die Tauchpumpe kommt es zu einer ungleichmäßigen Beladung des Schwimmkörpers, was zur Folge hätte, daß der Schlammabzug schräg im Wasser liegt. Für das Funktionieren des Schlammabzugs ist es aber erforderlich, daß die Höhe der Überlaufkante in Bezug auf die Wasseroberfläche ringsum konstant ist. Daher ist es von Vorteil, Mittel vorzusehen, welche den Schlammabzug in einer horizontalen Ebene fixieren.

Es können zwei schwenkbar an dem Schlammabzug sowie an einer Befestigungsvorrichtung angeordnete und parallel verlaufende Führungselemente vorgesehen sein, wobei der Abstand der Schwenkachsen an dem Schlammabzug und an der Befestigungsvorrichtung identisch ist und wobei die Verbindungslinien der Schwenkachsen an dem Schlammabzug und an der Befestigungsvorrichtung parallel verlaufen. Die Führungselemente sind im Sinne eines Parallelogramms angeordnet, wodurch gewährleistet wird, daß die horizontale Ausrichtung des Schlammabzugs sowie des Schwimmkörpers unabhängig von der Höhe des Wasserspiegels beibehalten wird.

Es ist insbesondere von Vorteil, wenn mindestens eines der Führungselemente durch die Ablaufleitung gebildet wird. Auf diese Weise gelangt man zu einer besonders einfachen und kostengünstigen Bauform.

In weiterer Ausgestaltung der vorliegenden Erfindung ist vorgesehen, daß wenigstens eines der Führungselemente an dem Schlammabzug sowie an der Befestigungsvorrichtung an jeweils zwei Punkten angelenkt ist. Durch die wandseitige Lagerung in zwei Punkten und die entsprechende Gegenlagerung beim Schwimmkörper ist bei auftretenden Kippmomenten eine seitliche Bewegungsmöglichkeit des Schlammabzugs nicht mehr gegeben, und daher kann auf diese Weise eine stabile Lage des Schlammabzugs im Wasser sichergestellt werden.

Der beschriebene Schlammabzug kann einerseits zum gleichmäßigen Abzug des Schwimmschlamms verwendet werden, andererseits können mit einem derartigen Abzug Schlammpartitionen entsprechend ihren Absetzeigenschaften selektiert werden. Je stärker die erzeugte Konvektionsströmung gewählt wird, um so höher ist der Anteil an abgeführten schweren Schlammpartikeln. Umgekehrt werden bei geringer Strömung nur die leichtesten Schlammpartikel abgezogen.

Das erfindungsgemäße Verfahren zur Selektionierung von Schlammpartitionen entsprechend ihren Absetzeigenschaften in einem Klärbecken umfaßt folgende Schritte: In dem Klärbecken wird eine Flüssigkeitsströmung erzeugt. Mittels eines Schlammabzugs, welcher eine knapp unter dem Wasserspiegel angeordnete Überlaufkante aufweist, wird eine Schlammpartition mit vorbestimmten Absetzeigenschaften aufgefangen, die dann abgefördert werden kann.

Im Gegensatz zu den im Stand der Technik beschriebenen Abzugsvorrichtungen kann mit Hilfe der in dem Klärbecken erzeugten Flüssigkeitsströmung ein großflächiger Abzug des Schwimmschlamms sowie der leichteren Schlammpartitionen erzielt werden. Dabei werden nur Schlammpartikel mit bestimmten Absetzeigenschaften aufgefangen und abgefördert. Durch Variation der erzeugten Flüssigkeitsströmung, insbesondere durch Variation der Geschwindigkeit dieser Strömung, kann die aufgefangene Schlammpartition beeinflußt werden.

Weitere Einzelheiten und Vorteile der vorliegenden Erfindung werden anhand mehrerer in den Zeichnungen dargestellter Ausführungsbeispiele näher erläutert. Es zeigen:
- Fig. 1: eine Übersicht über die Wirkungsweise des erfindungsgemäßen Schlammabzugs,
- Fig. 2: eine seitliche Darstellung des Schlammabzugs, aus der insbesondere ersichtlich ist, auf welche Weise der Schlammabzug im Wasser stabilisiert werden kann,
- Fig. 3: eine Ausführungsform der Erfindung, bei der die Auffangrinne den Schwimmkörper nur teilweise umläuft,
- Fig. 4: ein Ausführungsbeispiel des Schlammabzugs, bei dem die Auffangrinne den Schwimmkörper ganz umläuft.

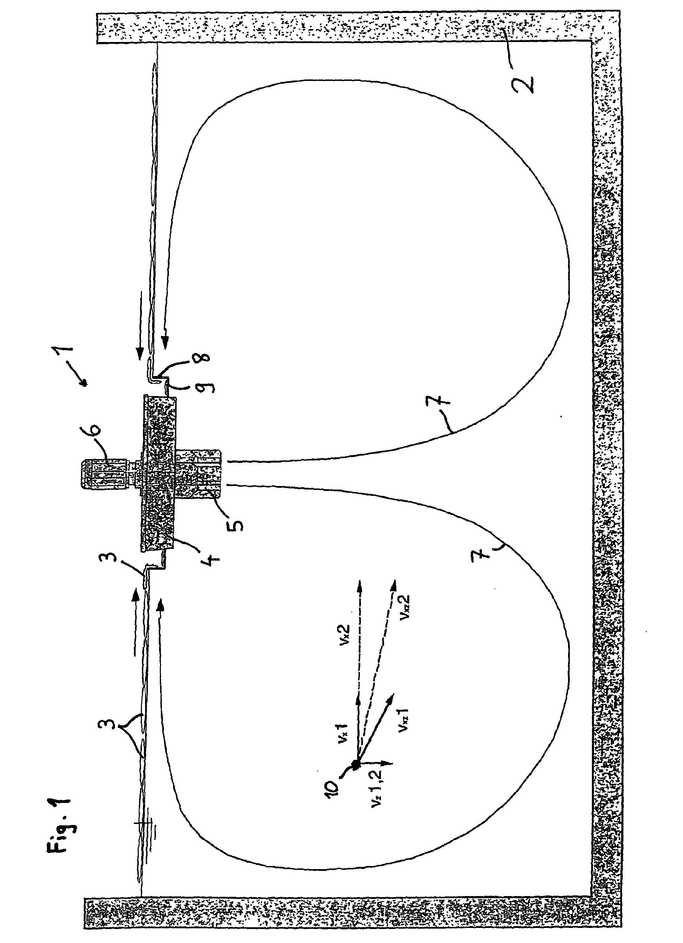

In Figur 1 ist die Wirkungsweise des erfindungsgemäßen Schlammabzugs im Überblick dargestellt. Der Schlammabzug 1 befindet sich in einem mit Wasser und Klärschlamm gefüllten Klärbecken 2, das typischerweise ein Belebungsbecken ist. An der Wasseroberfläche befindet sich eine Schwimmschlammschicht 3. Der Schlammabzug weist einen Schwimmkörper 4 sowie ein Mischaggregat 5 auf. Das Mischaggregat 5 ist als Rührwerk ausgeführt, wobei der Propeller des Rührwerks mittels einer Antriebswelle durch den Motor 6 angetrieben wird. Vorteilhafterweise wird ein Elektromotor verwendet. Der rotierende Propeller des Rührwerks 5 erzeugt eine vom Schlammabzug weg gerichtete Flüssigkeitsströmung 7. Aus oberflächennahen Schichten strömt Flüssigkeit zum Propeller hin nach, und auf diese Weise entsteht eine Konvektionsströmung, die dazu führt, daß sich der Schwimmschlamm 3 von allen Seiten her auf den Schlammabzug 1 zu bewegt.

Der Schwimmkörper 4 wird ganz oder teilweise von einer Auffangrinne 9 umlaufen, die an ihrer Außenseite mit einer höhenverstellbaren Überlaufkante 8 versehen ist.

Über diese Überlaufkante gelangt der Schlamm im freien Überfall in die Rinne 9. Mittels Spindelschrauben kann die Höhe der Überlaufkante 8 relativ zum Wasserspiegel eingestellt werden. Dadurch kann festgelegt werden, wieviel Wasser zusammen mit dem Schwimmschlamm in der Auffangrinne 9 gesammelt wird.

In Figur 1 sind außerdem die Geschwindigkeitskomponenten einer Schlammflocke 10 in x-Richtung sowie in z-Richtung dargestellt. Die Schlammflocke weist eine höhere Dichte auf als Wasser und würde daher zum Boden des Klärbeckens 2 absinken. Durch die vom Mischaggregat 5 erzeugte Flüssigkeitsströmung 7 wird die Schlammflocke in Richtung Wasseroberfläche bewegt. Bei geringer Strömungsgeschwindigkeit bewegt sich die Schlammflocke nur mit der geringen Geschwindigkeit vₓ1 in Richtung des Schlammabzugs 1. Gleichzeitig sinkt sie jedoch mit der Geschwindigkeit v_{z}1 ab. Die resultierende Geschwindigkeit v_{xz}1 ist daher relativ stark nach unten gerichtet, und deshalb gelangt die Schlammflocke 10 bei geringer Strömungsgeschwindigkeit nicht in die Auffangrinne 9. Anders verhält es sich bei höheren Strömungsgeschwindigkeiten. Als Beispiel ist eine horizontale Geschwindigkeit vₓ2 gezeigt, bei der sich die resultierende Geschwindigkeit v_{xz}2 ergibt. Bei entsprechender Einstellung der Überlaufkante 8 kann die Schlammflocke hier in die Auffangrinne 9 gelangen. Während also bei geringer Strömungsgeschwindigkeit nur der Schwimmschlamm sowie die leichtesten Schlammpartitionen abgezogen werden können, ist es durch eine Erhöhung der Strömungsgeschwindigkeit möglich, auch schwerere und daher schnell absinkende Schlammpartikel abzuziehen.

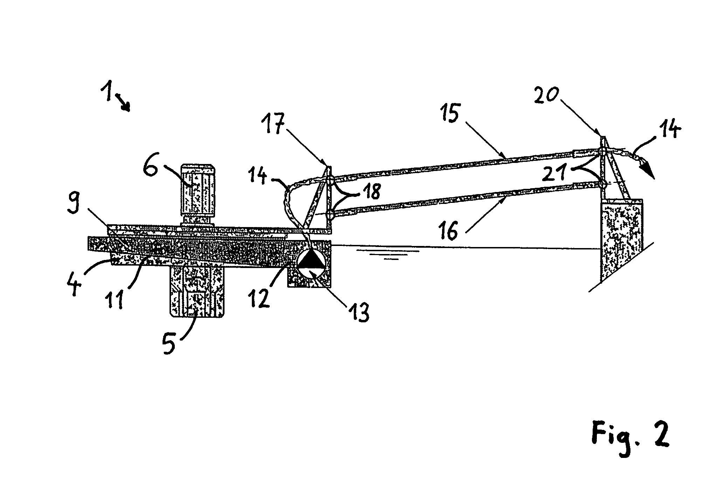

Aus Figur 2 ist erkennbar, wie der in der Auffangrinne 9 gesammelte Schlamm abgepumpt werden kann. Dazu ist ein schräger Verlauf 11 des Bodens der Auffangrinne 9 vorgesehen, so daß der Schlamm in Richtung des Abzugstrichters 12 rutscht. Dabei ist die hydraulische Leistungsfähigkeit der Rinne immer größer als die Menge des einströmenden Schwimmschlamms. Im Abzugstrichter 12 wird der Schwimmschlamm mit einem Förderaggregat 13, bevorzugt einer Tauchpumpe, über eine als Rohr- oder Schlauchleitung ausgebildete Ablaufleitung 14 aus dem System abgezogen.

Bei nichtmittiger Anordnung von Förderaggregat 13 und Rinne 9 ergibt sich das Problem, daß der Schwimmkörper sich nicht mehr in der Gleichgewichtslage befindet. Damit wäre aber eine Einstellung der Eintauchtiefe des Überfalls nicht mehr exakt möglich. Aus Figur 2 ist erkennbar, wie der Schlammabzug über eine Haltevorrichtung so geführt werden kann, daß der Schwimmkörper 4 Wasserspiegeländerungen im Becken problemlos folgen kann. Dazu sind zwei Führungselemente 15 und 16 vorgesehen, die jeweils an einer am Schlammabzug 1 befindlichen Halterung 17 und an einer beckenrandseitigen Befestigungsvorrichtung 20 angelenkt sind. Über quer verlaufende abzugseitige Schwenkachsen 18, sowie über beckenrandseitige Schwenkachsen 21 wird eine Beweglichkeit des Schlammabzugs 1 in z-Richtung ermöglicht. Dabei entspricht der Abstand der Schwenkachsen 18 an der Halterung 17 identisch dem Abstand der Schwenkachsen 21 an der Befestigungsvorrichtung 20. Die Verbindungslinien der Schwenkachsen 18 an der Halterung und der Schwenkachsen 21 an der Befestigungsvorrichtung verlaufen parallel. Die Halterung 17, die Führungselemente 15 und 16 und die Befestigungsvorrichtung 20 bilden daher ein Parallelogramm, und dadurch wird eine Fixierung des Schlammabzugs 1 in einer horizontalen Ebene gewährleistet. Das Prinzip des Parallelogramms wird z. B. auch bei Reißbrettern angewendet, bei denen die Lineale unabhängig von der jeweiligen Position ihre Richtung immer beibehalten.

Durch die wandseitige Lagerung (20) in zwei Punkten und die entsprechende Gegenlagerung (17) beim Schwimmkörper für zumindest eines der Führungselemente 15, 16 wird außerdem eine seitliche Instabilität bei Kippmomenten verhindert.

Ein Schenkel 15 des Parallelogramms kann als Ablaufleitung 14 ausgebildet sein, über die der Schwimmschlamm abgeleitet wird. Über den anderen Schenkel 16 des Parallelogramms kann die Stromversorgung von Mischaggregat 5 und Tauchpumpe 13 geführt werden.

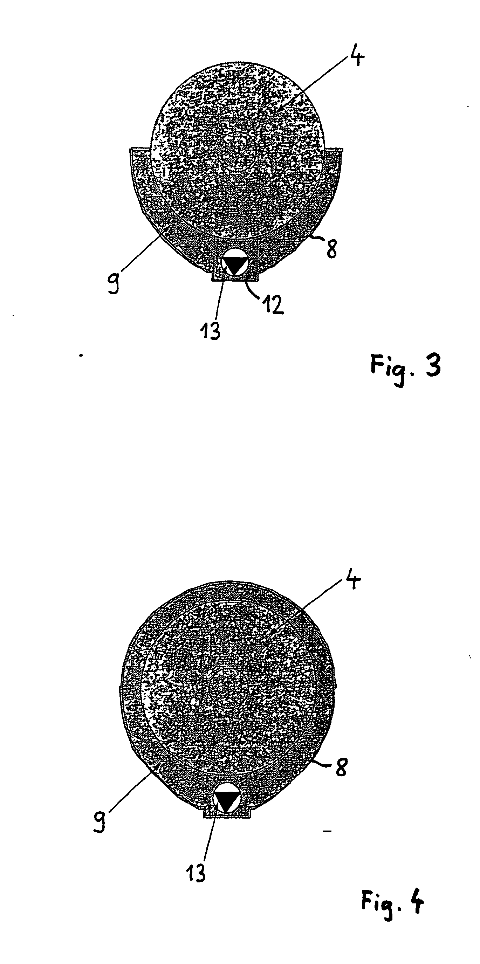

In Figur 3 ist der erfindungsgemäße Schlammabzug 1 von oben gesehen dargestellt. Dabei umläuft die Auffangrinne 9 den Schwimmkörper 4 nur teilweise. Schwimmschlamm, der über die Überlaufkante 8 in die Rinne 9 gelangt, rutscht in Richtung des Abzugstrichters 12 und wird dort von der Tauchpumpe 13 erfaßt und abgepumpt.

In Figur 4 ist eine Ausführungsform des Schlammabzugs 1 von oben gesehen dargestellt, bei dem die Auffangrinne 9 den Schwimmkörper 4 komplett umläuft. Dadurch kann Schlamm von allen Richtungen her über die Überlaufkante 8 in die Auffangrinne 9 einfallen und abgepumpt werden.

Erfindungsgemäß kann nicht nur der Schwimmschlamm aus Klärbecken abgezogen werden, sondern auch der Überschußschlamm. Der Überschußschlamm, der üblicherweise im Nachklärbecken abgezogen wird, stellt das Endprodukt der biologischen Abwasserreinigung dar. Indem man den Überschußschlamm zusammen mit dem Schwimmschlamm an der Beckenoberfläche des durchmischten Klärbekkens abzieht, ergibt sich eine Selektionierung des abgezogenen Schlammes, wobei bevorzugt der leichte Schlamm abgezogen wird.

Im Belebungsbecken gibt es immer Schlammpartikel, die wesentlich leichter als die übrigen sind. Sind sehr viele der leichten Partikel im Klärbecken, dann gelingt es häufig nicht, den Schlamm in der Nachklärung komplett vom Abwasser zu trennen. Der Schlamm gelangt in den Ablauf, man spricht dann von Blähschlamm.

Zieht man mit der erfindungsgemäßen Einrichtung den Überschußschlamm in einem durchmischten Belebungsbecken an der Beckenoberfläche ab, so wird in Folge der Strömungscharakteristik bevorzugt leichterer Schlamm abgezogen. Damit kann sich der schwerere Schlamm wie gewünscht im Becken anreichern. Der Grad der Selektionierung kann durch die Mischintensität gesteuert werden. Je geringer die Strömungsgeschwindigkeit ist, desto mehr leichtere Partikel werden abgezogen. Die Mischintensität wird über die Anschlußleistung bzw. über die Geschwindigkeit des Propellers eingestellt.

## Patentansprüche

1. Schlammabzug zum Abzug eines Schlammpartition umfassend den Schwimmschlamm und eine Schlammpartition höherer Dichte in einem Klärbecken (2) mit
einem Schwimmkörper (4),
einem am Schwimmkörper angebrachten Rührwerk (5) zur Erzeugung einer vom Schlammabzug (1) nach unten gerichteten Flüssigkeitsströmung (7),
einem am Schwimmkörper angebrachten Auffangbehälter (9) mit einer ganz oder teilweise um den Schlammabzug (1) umlaufenden Überlaufkante (8), sowie
einem Förderaggregat (13), welches den in den Auffangbehälter gelangenden Schlamm über eine Ablaufleitung (14) abführt,
**dadurch gekennzeichnet,**
**daß** zwei schwenkbar an dem Schlammabzug (17) sowie an einer Befestigungsvorrichtung (20) angeordnete und parallel verlaufende Führungselemente (15, 16) vorgesehen sind, wobei der Abstand der Schwenkachsen (18, 21) an dem Schlammabzug und an der Befestigungsvorrichtung identisch ist und wobei die Verbindungslinien der Schwenkachsen (18, 21) an dem Schlammabzug und an der Befestigungsvorrichtung parallel verlaufen.

2. Schlammabzug nach Anspruch 1, **dadurch gekennzeichnet, daß** der Auffangbehälter (9) als ganz oder teilweise um den Schwimmkörper (4) umlaufende Auffangrinne ausgebildet ist.

3. Schlammabzug nach einem der Ansprüche 1 oder 2, **dadurch gekennzeichnet, daß** die Höhe der Überlaufkante (8) relativ zum Wasserspiegel einstellbar ist.

4. Schlammabzug nach einem der vorhergehenden Patentansprüche, **dadurch gekennzeichnet, daß** der Auffangbehälter (9) eine Schräge aufweist, wobei der in den Auffangbehälter gelangende Schlamm entlang der Schräge zum Förderaggregat (13) gelangt.

5. Schlammabzug nach einem der vorhergehenden Patentansprüche, **dadurch gekennzeichnet, daß** das Förderaggregat (13) eine Tauchpumpe ist.

6. Schlammabzug nach Anspruch 1, **gekennzeichnet durch** eine Vorrichtung zur variablen Einstellung der Drehzahl des Rührwerks (5), insbesondere einer Frequenz umsetzer.

7. Schlammabzug nach Anspruch 1, **dadurch gekennzeichnet, daß** mindestens eines der Führungselemente (15) durch die Ablaufleitung (14) gebildet wird.

8. Verwendung eines Schlammabzugs nach Anspruch 6 zum selektiven Abzug einer Schlammpartition mit gewissen Absetzeigenschaften,
wobei durch ein entsprechendes Einstellen der variablen Drehzahl des Rührwerks (5) die Geschwindigkeit der von dem Rührwerk (5) erzeugten Flüssigkeitsströmung (7) so gewählt wird, dass nur Schlammpartikel mit den Absetzeigenschaften der leichteren, selektiv abzuziehenden Schlammpartition abgezogen werden, damit sich eine schwerere Schlammpartition im Klärbecken anreichern kann.

9. Verfahren zum selektiven Abzug einer Schlammpartition umfassend den Schwimmschlamm und eine Schlammpartition höhere Dichte aus einem Klärbecken (2), **gekennzeichnet durch** folgende Schritte:
a) Erzeugen einer Flüssigkeitsströmung (7) in dem Klärbecken (2) **durch** ein Rührwerk (5) mit variabler Drehzahl;
b) Auffangen der selektiv abzuziehenden Schlammpartition mittels eines Schlammabzugs (1), welcher eine knapp unter dem Wasserspiegel angeordneten Überlaufkante (8) aufweist;
c) Abfördern der aufgefangenen Schlammpartition
wobei **durch** ein entsprechendes Einstellen der variablen Drehzahl des Rührwerks (5) die Geschwindigkeit der von dem Rührwerk (5) erzeugten Flüssigkeitsströmung (7) so gewählt wird, dass nur die genannte Schlammpartition aufgefangen wird, damit sich eine schwerere Schlammpartition im Klärbecken anreichern kann.

## Claims

1. Sludge-removal installation by means of which a sludge fraction comprising the floating sludge and a higher-density sludge fraction is removed from a settling tank (2), having
a float (4),
an agitator (5) which is fitted on the float and is intended for producing a liquid flow (7) which is directed downwards from the sludge-removal installation (1),
a collecting vessel (9) which is fitted on the float and has an overflow edge (8) running all the way, or part of the way, around the sludge-removal installation (1), and
a conveying subassembly (13) by means of which the sludge passing into the collecting vessel is discharged via an outflow line (14),
**characterized**
**by** the provision of two parallel guide elements (15, 16) which are arranged in a pivotable manner on the sludge-removal installation (1) and on a fastening arrangement (20), the spacings between the pivot axes (18, 21) on the sludge-removal installation and on the fastening arrangement being identical, and the connecting lines between the pivot axes (18, 21) on the sludge-removal installation and on the fastening arrangement running parallel.

2. Sludge-removal installation according to Claim 1, **characterized in that** the collecting vessel (9) is designed as a collecting channel which runs all the way, or part of the way, around the float (4).

3. Sludge-removal installation according to either of Claims 1 and 2, **characterized in that** the height of the overflow edge (8) can be adjusted relative to the water level.

4. Sludge-removal installation according to one of the preceding patent claims, **characterized in that** the collecting vessel (9) has a slope, the sludge which passes into the collecting vessel passing to the conveying subassembly (13) along the slope.

5. Sludge-removal installation according to one of the preceding patent claims, **characterized in that** the conveying subassembly (13) is a submersible pump.

6. Sludge-removal installation according to Claim 1, **characterized by** an arrangement for variably adjusting the rotational speed of the agitator (5), in particular a frequency converter.

7. Sludge-removal installation according to Claim 1, **characterized in that** at least one of the guide elements (15) is formed by the outflow line (14).

8. Use of a sludge-removal installation according to Claim 6 for the selective removal of a sludge fraction with certain settling properties, appropriate adjustment of the variable rotational speed of the agitator (5) resulting in the speed of the liquid flow (7) produced by the agitator (5) being selected such that only sludge particles with the settling properties of the lighter sludge fraction which can be selectively removed are removed in order that a heavier sludge fraction can accumulate in the settling tank.

9. Method of selectively removing from a settling tank (2) a sludge fraction comprising the floating sludge and a higher-density sludge fraction, **characterized by** the following steps:
a) producing a liquid flow (7) in the settling tank (2) using an agitator (5) of variable rotational speed;
b) using a sludge-removal installation (1) with an overflow edge (8) arranged just beneath the water level to collect the sludge fraction which can be selectively removed;
c) conveying away the sludge fraction collected,
appropriate adjustment of the variable rotational speed of the agitator (5) causing the speed of the liquid flow (7) produced by the agitator (5) to be selected such that only the abovementioned sludge fraction is collected, in order that a heavier sludge fraction can accumulate in the settling tank.

## Revendications

1. Évacuation de boues pour l'évacuation d'une partition de boues, comprenant la boue flottante et une partition de boue de densité plus élevée, dans un bassin de curage (2), avec
un flotteur (4),
un agitateur (5) monté sur le flotteur, pour la production d'un courant de liquide (7) dirigé de l'évacuation de boues (1) vers la bas,
un récipient collecteur (9) disposé sur le flotteur avec une arête de débordement (8) entourant complètement ou partiellement l'évacuation de boues (1),
ainsi que
une unité de transport (13), laquelle évacue par une conduite d'évacuation (14) la boue accédant dans le récipient collecteur,
**caractérisée en ce que**
deux éléments de guidage (15, 16) disposés basculants sur l'évacuation de boues (17) ainsi que sur un dispositif de fixation (20) et s'étendant parallèlement sont prévus, sachant que la distance des axes de basculement (18, 21) sur l'évacuation de boues (1) et sur le dispositif de fixation est identique et que les lignes joignant les axes de basculement (18, 21) sur l'évacuation de boues et sur le dispositif de fixation s'étendent parallèlement.

2. Évacuation de boues selon la revendication 1, **caractérisée en ce que** le récipient collecteur (9) est configuré comme rigole collectrice entourant complètement ou partiellement le flotteur (4).

3. Évacuation de boues selon la revendication 1 ou 2, **caractérisée en ce que** la hauteur de l'arête de débordement (8) est réglable par rapport au niveau de l'eau.

4. Évacuation de boues selon l'une quelconque des revendications précédentes, **caractérisée en ce que** le récipient collecteur (9) comporte une pente, la boue entrant dans le récipient collecteur accédant le long de la pente à l'unité de transport (13).

5. Évacuation de boues selon l'une quelconque des revendications précédentes, **caractérisée en ce que** l'unité de transport (13) est une pompe immergée.

6. Évacuation de boues selon la revendication 1, **caractérisée par** un dispositif pour le réglage variable de la vitesse de rotation de l'agitateur (5), en particulier un convertisseur de fréquence.

7. Évacuation de boues selon la revendication 1, **caractérisée en ce qu'**au moins un des éléments de guidage (15) est formé par la conduite d'évacuation (14).

8. Utilisation d'une évacuation de boues selon la revendication 6 pour l'évacuation sélective d'une partition de boue avec certaines caractéristiques de sédimentation, pour laquelle, par un réglage approprié de la vitesse de rotation variable de l'agitateur (5), la vitesse du courant de liquide (7) produit par l'agitateur (5) est choisie de telle sorte que seules des particules de boue avec les propriétés de sédimentation de la partition de boue plus légère à évacuer sélectivement sont évacuées, pour qu'une partition de boue plus lourde puisse s'enrichir dans le bassin de curage.

9. Procédé pour l'évacuation sélective d'une partition de boue, comprenant la boue flottante et une partition de boue de densité plus élevée, depuis un bassin de curage, **caractérisée par** les étapes suivantes:
a) génération d'un courant de liquide (7) dans le bassin de curage (2) par un agitateur (5) avec une vitesse de rotation variable;
b) captage de la partition de boue pouvant être évacuée sélectivement au moyen d'une évacuation de boues (1), laquelle comporte une arête de débordement (8) disposée tout juste en dessous du niveau de l'eau;
c) évacuation par transport de la partition de boue captée,
dans lequel, par un réglage approprié de la vitesse de rotation variable de l'agitateur (5), la vitesse du courant de liquide (7) produit par l'agitateur (5) est choisie telle que seule la partition de boue susmentionnée est captée, pour qu'une partition de boue plus lourde puisse s'enrichir dans le bassin de curage.
